# EUROPÄISCHE PATENTSCHRIFT

(11) **EP 0 853 752 B1**
(45) Veröffentlichungstag und Bekanntmachung des Hinweises auf die Patenterteilung: **23.10.2002**
(21) Anmeldenummer: 96927703.7
(22) Anmeldetag: 07.08.1996
(51) Int. Cl.: G01B 11/27

(54) **VORRICHTUNG ZUM FESTSTELLEN VON FLUCHTUNGSFEHLERN ZWEIER HINTEREINANDER ANGEORDNETER WELLEN**
DEVICE FOR ASCERTAINING MISALIGNMENTS OF TWO SHAFTS ARRANGED ONE BEHIND THE OTHER
DISPOSITIF POUR DETERMINER DES DEFAUTS D'ALIGNEMENT DE DEUX ARBRES DISPOSES L'UN DERRIERE L'AUTRE

(43) Veröffentlichungstag der Anmeldung: 22.07.1998
(73) Patentinhaber: Prüftechnik Dieter Busch AG, 85737 Ismaning (DE)
(72) Erfinder: LYSEN, Heinrich, D-85748 Garching (DE)
(86) Internationale Anmeldenummer: EP9603502
(87) Internationale Veröffentlichungsnummer: WO98005924

(56) Entgegenhaltungen:
- FR-A- 2 440 025
- GB-A- 2 128 324

## Beschreibung

Die Erfindung bezieht sich auf eine Vorrichtung gemäß dem einleitenden Teil des Patentanspruchs 1.

Vorrichtungen dieser Art sind in verschiedenen Ausführungsformen bekannt und arbeiten nach verschiedenen Verfahren.

Ein erstes bekanntes Verfahren ist das sogenannte Prisma-Verfahren. Bei diesem Verfahren befinden sich der Sender zum Aussenden des Fluchtungsmeßstrahls und der zugehörige elektrooptische Positionsdetektor auf ein- und derselben Welle, und der Flchtungsmeßstrahl ist auf ein ihm mit seiner Hypotenusenebene zugewendetes rechtwinkliges Spiegelprisma gerichtet, das starr auf der anderen Welle montiert ist und den Lichtstrahl mit einem vom jeweiligen Fluchtungszustand abhängigen Reflexionswinkel zu dem Positionsdetektor reflektiert, so daß die Lage des Auftreffpunktes des Lichtstrahls auf der lichtempfindlichen Detektorfläche ebenfalls vom Fluchtungszustand abhängig ist.

Ein anderes bekanntes Verfahren, bekannt aus z.B. GB-2128324 A, ist das sogenannte Doppelradialverfahren, bei dem zwei Lichtsender und zwei zweiachsige - elektrooptische Positionsdetektoren verwendet werden, wobei auf jeder Welle ein Positionsdetektor und ein Lichtsender angeordnet sind und der Lichtsender auf der einen Welle den Fluchtungsmeßstrahl zum Positionsdetektor auf der anderen Welle sendet.

Es gibt verschiedene bekannte Durchführungsarten der vorgenannten Verfahren, z. B. eine, bei der die miteinander gekoppelten Wellen jeweils um 90° gedreht und in mindestens drei von diesen einen Winkelabstand von 90° aufweisenden Winkelpositionen Messungen vorgenommen werden, oder eine andere, bei der die gekoppelten Wellen nur über eine relativ kleinen Winkelbereich gedreht und dabei in einer Vielzahl von nur kleine Winkelabstände aufweisenden Winkelpositionen Messungen vorgenommen werden und dann daraus die Bahn errechnet wird, die der Lichtstrahlauftreffpunkt bei Drehung der Wellen über den Bereich einer vollen Umdrehung auf der jeweiligen lichtempfindlichen Detektorfläche beschreiben würde, um aus dieser Bahn schließlich den Fluchtungsfehler zu errechnen.

In Verbindung mit der Durchführung der Fluchtungsmessung nach den vorstehenden bekannten Verfahren ist es häufig nötig oder zumindest erwünscht, auch den Winkel zu erfassen, den eine vorbestimmte radiale Bezugsrichtung der einen und/oder anderen Welle mit dem Erdlot einschließt. Hierfür wurde bisher an der jeweiligen Welle gesondert von den bei den vorgenannten bekannten Fluchtungsmeßverfahren eingesetzten Lichtsendern und Positionsdetektoren ein Inklinometer zum Festellen des momentanen Winkels zwischen der vorbestimmten radialen Bezugsrichtung und dem Erdlot montiert.

Es sind elektrooptische Erdlot-Inklinometer bekannt, die die Winkelinformation als geradlinige Hell-Dunkel-Grenze auf der Detektorfläche eines zweiachsigen elektrooptischen Positionsdetektors darstellen, die mit der Drehung des Detektorgehäuses um eine zu der Detektorfläche senkrechte Achse ihre Lage auf der Detektorfläche entsprechend ändert, so daß die von dem Positionsdetektor erzeugten elektrischen Signale diese Winkelinformation beinhalten.

Der Erfindung liegt die Aufgabe zugrunde, eine Vorrichtung gemäß dem einleitenden Teil des Patentanspruchs 1 so zu gestalten, daß sie mit einem minimalen zusätzlichen Raumbedarf fähig ist, auch den/die Winkel zu messen, den eine vorbestimmte radiale Bezugsrichtung der Wellenachse(n) zum Erdlot aufweist, so daß zusätzliche gesonderte Inklinometer entfallen können.

Die vorstehende Aufgabe wird durch die Merkmale des Patentanspruchs 1 gelöst.

Die erfindungsgemäße Vorrichtung ist insofern besonders vorteilhaft, als
- mit der Montage der Vorrichtung für die Feststellung des Fluchtungszustandes auch das Inklinometer mit an der/den Welle(n) montiert ist, und
- für die Weiterleitung der elektrischen Signale zur elektronischen Auswerteschaltung ein einziges Kabel verwendet und ggf. auch die gleiche Schaltung mit passender Software für die Bereitstellung einer graphischen oder phonetischen Information sowohl über den Fluchtungszustand der Wellen als auch über den momentanen Winkel einer radialen Bezugsrichtung zum Erdlot benutzt werden kann, wodurch der nötige Kostenaufwand gegenüber dem Einsatz gesonderter Geräte für die Fluchtungsmessung und die Winkelmessung bezüglich des Erdlots erheblich gesenkt werden.

Hinzu kommt, daß diese Vorteile mit eine Minimum an zusätzlichem Raumbedarf auf den Wellen erreicht werden.

Die abhängigen Ansprüche haben bevorzugte Ausführungen der Vorrichtung gemäß Anspruch 1 zum Gegenstand. Von besonderer Bedeutung insbesondere in kostenmäßiger Hinsicht ist hierbei die Maßnahme gemäß Patentanspruch 2, weil dadurch nur ein einziges Halbleiterplättchen sowohl für die Fluchtungsmessung als auch für die Erdlot-Winkelmessung erforderlich ist, was in Anbetracht der relativ hohen Kosten von zweiachsigen Positionsdetektoren bedeutsam ist. Die Maßnahmen gemäß den Patentansprüchen 4 und 5 ermöglichen auf besonders einfache und störsichere Weise die abwechselnde elektronische Bereitsstellung der Fluchtungs-Information und der Erdlotwinkel-Information ohne unerwünschte gegenseitige Beeinflussung und -im Bedarfsfalle- im dauernden Wechselbetrieb.

Die Erfindung wird nachstehend anhand der Zeichnung an einem Ausführungsbeispiel noch näher erläutert.

In der Zeichnung zeigt:
- Fig. 1: Eine bevorzugte Ausführungsform der Vorrichtung in schematischer Darstellung von der Seite gesehen,
- Fig. 2: eine andere bevorzugte Ausführung der Vorrichtung ebenfalls in schematischer Darstellung von der Seite gesehen,
- Fig. 3: einen bei den Ausführungsformen nach Fig. 1 und 2 einsetzbaren Positionsdetektor im Betriebszustand in schematischer Darstellung für den Betrachter der Fig. 1 von rechts (a), von vorn (b - Stirnansicht) und von links gesehen.

Die in der Zeichnung dargestellte Vorrichtung dient dem Feststellen von Fluchtungsfehlern zweier hintereinander angeordneter, nur schmatisch angedeuteter Wellen 1, 2, die durch eine Kupplung K drehfest miteinander verbunden sind.

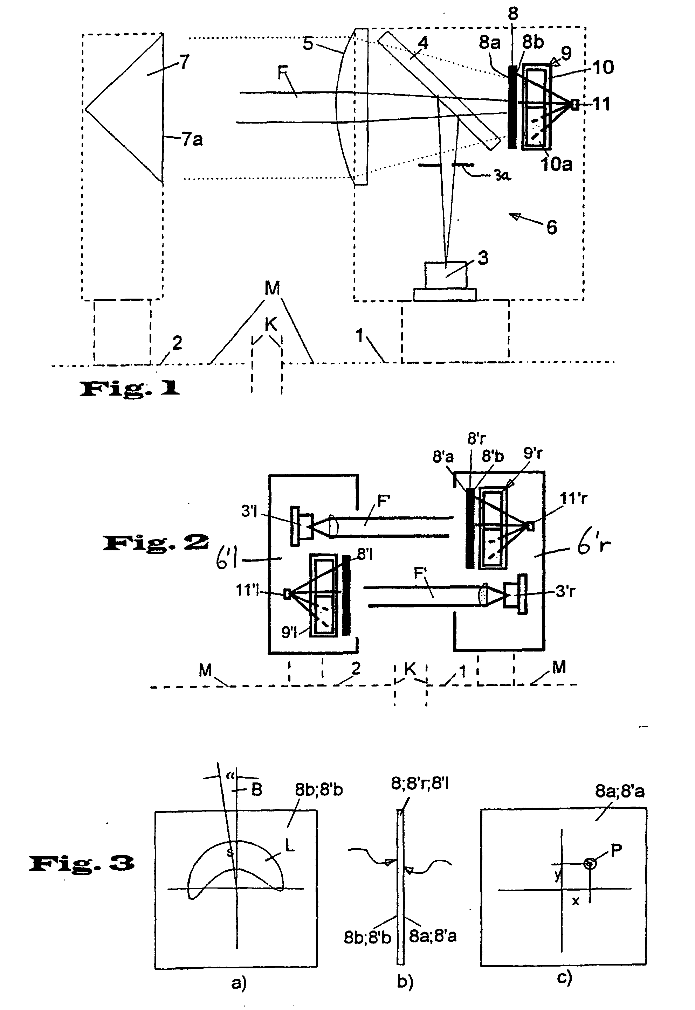

Bei der Ausführung gemäß Fig. 1 weist die Vorrichtung einen starr mit der einen Welle 1 verbundenen Lichtsender 6 auf, der aus einer Lichtquelle 3 mit Blende 3a, einem unter 45° zur Welle 1 geneigten halbdurchlässigen Umlekspiegel 4 und einer Sammeloptik 5 besteht. Der Lichtsender 6 richtet den von der Lichtquelle 3 etwa senkrecht zur Mittelachse M der Welle 1 ausgesendeten Lichtstrahl nach Umlenkung am Spiegel 4 und Bünddelung mittels der Optik 5 in Form eines Lichtbündels geringer Divergenz, vorzugsweise eines parallel gebündelten Laserstrahls, als Fluchtungsmeßstrahl F im wesentlichen parallel zur Welle 1 auf ein rechtwinkliges Dachkantprisma 7, das auf der anderen Welle 2 in solcher Weise starr befestigt ist, daß seine Hypotenusenebene 7a dem einfallenden Fluchtungsmeßstrahl F zugewendet ist und sich in einer zur Welle 2 radialen Ebene erstreckt. Das Dachkantprisma 7 reflektiert den einfallenden Fluchtungsmeßstrahl F durch die Sammeloptik 5 und -geradlinigdurch den Umlenkspiegel 4 hindurch auf die ihm zugewendete ebene Detektorfläche 8a eines zweiachsigen optoelektronischen Positionsdetektors 8, auf die der Fluchtungsmeßstrahl F in Form eines kreisrunden Lichtflecks L von vorzugsweise kleinem Durchmesser auftrifft, wobei die Lage des Auftreffpunktes P auf der Detektorfläche 8a davon abhängt, ob und ggf. unter welchem Winkel sich die Mittelachsen M der Wellen 1 und 2 kreuzen oder schneiden (Winkelversatz) und/oder ob und ggf. in welchem Ausmaß sie - bezogen auf parallele Ausrichtung - in radialer Richtung gegeneinander versetzt sind (Parallelversatz). Es sei bemerkt, daß im allgemeinen der Parallelversatz und der Winkelversatz, die zur Vermeidung von Schäden an der Kupplung K und an den Wellenlagern gemessen und beseitigt werden müssen, nur gering sind.

Der Positionsdetektor 8 liefert in Abhängigkeit von der Lage des Auftreffpunktes P bzw. dessen rechtwinkligen Koordinaten x und y entsrechende elektrische Signale an einen Rechner oder eine entsprechende Schaltungsanordnung, der/die die Signale programmgesteuert auswertet und die die nötigen vorzunehmenden Fluchtungskorrekturen betreffenden Daten errechnet und ausgibt.

Das vostehend erörterte Gundprinzip, nach dem die Vorrichtung gemäß Fig. 1 arbeitet, ist bekannt und wird als Prisma-Verfahren bezeichnet.

Es ist aus verschiedenen Gründen, z.B. für die Auswertung der Meßsignale im Rechner, häufig nötig oder zumindest vorteilhaft zu wissen, wie groß der Winkel α ist, den eine vorbestimmte wellenbezogene radiale Bezugsrichtung mit dem Erdlot aktuell einschließt. Hierfür wurde im Stande der Technik bisher ein Inklinometer unabhängig von der Vorrichtung zum Messen des Fluchtungszustandes der Wellen 1, 2 gesondert an einer der beiden Wellen befestigt.

Die Erfindung ermöglicht es, die vorgenannte Winkelmessung kostengünstiger, raumsparender und besonders genau und betriebssicher dadurch durchzuführen, daß der elektrooptische Positionsdetektor 8 der Vorrichtung eine weitere, nahe bei der Detektorfläche 8a für die Fluchtungsmessung gelegene, zu dieser parallele lichtempfindliche Detektorfläche 8b aufweist, die von der anderen Seite des Detektors 8 zugänglich ist und der ein optisches Inklinometer 9 zum Feststellen des momentanen Winkels (α) zum Erdlot vorgebaut ist. Dieses Inklinometer 9 sendet die Winkelinformation als winkelabhängige Lage eines Lichtflecks L auf diese andere Detektorfläche 8b aus. Der Lichtfleck L erhält die aus Fig. 3a ersichtliche, besonders vorteilhafte Form mittels einer in den optischen Weg zwischen dem Inklinometer 9 und der Detektorfläche 8b eingebauten, nicht näher dargestellten Blende und verändert beim Drehen des Detektors 8 mit den Wellen 1 und 2 um deren Mittelachse M seine Lage bzw., genauer, die Lage seines Flächenschwerpunkts S auf der Detektorfläche 8b entsprechend dem Drehwinkel α der Wellen 1, 2 gegenüber der vorbestimmten Bezugsrichtung B, so daß die von der Detektorfläche 8b abgeleiteten elektrischen Signale die gewünschte, auf das Erdlot und die ausgewählte Bezugslage B bezogene Winkelinformation beinhalten und entsprechend programmgesteuertin dem Rechner ausgewertet werdenkönnen.

Das optische Inklinometer 9 weist bei den in der Zeichnung dargestellten Ausführungsformen der Erfindung ein lichtdurchlässiges Gefäß 10 auf, das teilweise mit einer lichtundurchlässigen Flüssigkeit gefüllt ist, die das von einer weiteren Lichtquelle 11 ausgesendete Licht derart teilweise absorbiert, daß nur der den Behälter 10 über der Flüssigkeit durchsetzende Anteil des Lichts in Form des mit dem Winkel α lageveräderlichen Lichtflecks L (Fig. 3a) auf die Detektorfläche 8b fällt.

Vorzugsweise werden die beiden lichtempfindlichen Detektorflächen 8a, 8b des Positionsdetektors 8 von den entgegengesetzten Oberflächen ein- und desselben lichtempfindlichen Halbleiterplättchens gebildet. Sie können aber auch von den entgegengesetzten Oberflächen zweier Rücken an Rücken angeordneter, voneinander optisch und elektrisch isolierter Halbleiterplättchen gebildet sein.

Eine besonders betriebssichere und kostengünstige Auswertung der von den Detekorflächen 8a, 8b abgeleiteten elektrischen Signale kann insbesondere bei Einsatz eines beiden Detektorflächen 8a und 8b gemeinsamen Halbleiterplättchens mittels einer Schalteinrichtung zum Ein- und Ausschalten der Lichtquelle 3 für den Fluchtungsmeßstrahl F und zum Ein- und Ausschalten der Lichtquelle 11 für den Lichtfleck L in untereinander wechselnder Folge erzielt werden. Diese Schalteinrichtung wird vorzugsweise so eingerichtet, daß zwischen jedem Ausschalten der einen Lichtquelle 3 bzw. 11 und dem folgenden Ein- schalten der anderen Lichtquelle 11 bzw. 3 eine Pause vorhanden ist.

Die Ausführungsform gemäß Fig. 2 unterscheidet sich von derjenige gemäß Fig. 1 dadurch, daß auf jeder der beiden Wellen 1,2 ein einen Fluchtungsmeßstrahl F' aussendender Lichtsender 6'r, 6'l und zweiachsiger optoelektronischer Positionsdetektor 8'r, 8'l mit zugehörigem optischem Inklinometer 9'r, 9'l befestigt ist, wobei der jeweilige Lichtsender 6'r bzw. 6'l seinen Fluchtungsmeßstrahl F' auf die Detektorfläche 8a' des ihm gegenüber auf der jeweils anderen Welle befestigten optoelektronischen Positionsdetektors 8'l bzw. 8'r richtet.

Vom Fluchtungsmeßprinzip her, das als Doppelradialverfahren bezeichnet wird, ist die Vorrichtung nach Fig. 2 ebenfalls bekannt. Neu ist bei ihr ebenso wie bei der Vorrichtung gemäß Fig. 1 der Einsatz einer in unmittelbarer Nachbarschaft zu der ersten Detektorfläche 8a' für die Fluchtungsmessung angeordneten, dazu parallelen weiteren Detektorfläche 8b' mit vorgebautem Inklinometer 9'r, 9'l, u. zw. in gleicher Weise wie bei der Ausführung nach Fig. 1.

Bei der Ausführung nach Fig. 2 haben beide optoelektronischen Positionsdetektoren 8'r und 8'l eine zweite Detektorfläche 8b' mit vorgebautem Inklinometer 9'r bzw. 9'l. Diese Darstellung wurde gewählt, um zu zeigen, daß der Positionsdetektor mit integriertem Inklinometer auf jeder der beiden beiden Wellen 1,2 angeordnet werden kann. Im allgemeinen wird es genügen, nur einen einzigen optoelektronischen Detektor mit integriertem Inklinometer auf nur einer der beiden Wellen vorzusehen und die andere Welle mit einem gewöhnlichen optoelektronischen Positionsdetektor mit nur einer Detektorfläche 8a auf der dem zugehörigen Lichtsender zugewendeten Seite auszurüsten.

## Patentansprüche

1. Vorrichtung zum Feststellen von Fluchtungsfehlern zweier hintereinander angeordneter Wellen (1, 2), mit
a) mindestens einem starr mit der einen und/oder der anderen Wellen (1, 2) verbundenen Lichtsender (6, 6'r, 6'l), der einen Fluchtungsmeßstrahl (F, F') in Form eines Lichtbündels, insbesondere in Form eines Laserstrahls, von der einen Welle zur anderen aussendet, und
b) einem oder mehreren zweiachsigen elektrooptischen Positionsdetektoren (8,8'r, 8'l) deren Anzahl der Zahl der ausgesendeten Fluchtungs-Meßstrahlen (F, F') entspricht und die jeweils mit einer der Wellen (1,2) starr verbunden sind, wobei die elektrooptischen Positionsdetektoren geeignet sind, die Koordinaten (x,y,) des Auftreffpunktes (P) eines auf die jewetlige lichtempfindliche Detektorfläche (8a,8'a) einfallenden Fluchtungsmeßstrahls durch zugehörige elektrische Signale zu repräsentieren, und wobei die elektrischen Signale in einer elektronischen Schaltungsanordnung zur Errechung des Fluchtungszustandes auswertbar sind,
**dadurch gekennzeichnet, daß**
c) mindestens ein elektrooptischer Positionsdetektor (8, 8'r, 8'l) der Vorrichtung zwei einander benachbarte, zueinander im wesentlichen parallele, von entgegengesetzten Seiten her zugängliche lichtempfindliche Detektorflächen (8a, 8b; 8'a, 8'b) aufweist, von denen die eine (8a, 8'a) den zugehörigen Fluchtungsmeßstrahl (F; F') empfängt und der anderen ein optisches Inklinometer (9; 9'r, 9'l) zum Feststellen des Winkels (α) der vor einer vorbestimmten wellenbezogenen radialen Bezugsrichtung und dem Erdlot eingeschlossen wird, vorgebaut ist, das geeignet ist die Winkelinformation als winkelabhängige Lage eines Lichtflecks (L) auf diese andere Detektorfläche (8b;8'b) auszusenden.

2. Vorrichtung nach Anspruch 1, **dadurch gekennzeichnet, daß** die beiden lichtempfindlichen Detektorflächen (8a, 8b; 8'a, 8'b) des Positionsdetektors (8; 8'r, 8'l) von den entgegengesetzten Oberflächen ein- und desselben lichtempfindlichen Halbleiterplättchens gebildet sind.

3. Vorrichtung nach Anspruch 1, **dadurch gekennzeichnet, daß** die beiden lichtempfindlichen Detektorflächen des Positionsdetektors von den entgegengesetzten Oberflächen zweier Rücken an Rücken angeordneter, voneinander optisch und elektrisch isolierter Halbleiterplättchen gebildet sind.

4. Vorrichtung nach einem der vorhergehenden Ansprüche, **gekennzeichnet durch** eine Schalteinrichtung zum Ein- und Ausschalten der Lichtquelle (3; 3'r, 3'l) für den Fluchtungsmeßstrahl (F; F') und zum Ein- und Ausschalten der Lichtquelle (11; 11'r, 11'l) für den Lichtfleck (L) in untereinander wechselnder Folge.

5. Vorrichtung nach Anspruch 4, **dadurch gekennzeichnet, daß** die Schalteinrichtung so eingerichtet ist, daß zwischen jedem Ausschalten der einen Lichtquelle und dem folgenden Einschalten der anderen Lichtquelle eine Pause vorhanden ist.

## Claims

1. Device for establishing alignment defects of two shafts (1, 2) disposed one behind the other, having
a) at least one light emitter (6, 6'r, 6'l) which is rigidly connected to the one and/or the other shaft (1, 2) and which emits an alignment measurement beam (F, F') in the form of a light beam, in particular in the form of a laser beam, from the one shaft to the other, and
b) one or more biaxial electrooptical position detectors (8, 8'r, 8'l), whose number corresponds to the number of alignment measurement beams (F, F') emitted and which are respectively rigidly connected to one of the shafts (1, 2), the electrooptical position detectors being suitable to represent the coordinates (x, y) of the point of incidence (P) of an alignment measurement beam incident upon the respective light-sensitive detector surface (8a, 8'a) by means of associated electrical signals, and it being possible for the electrical signals to be evaluated in an electronic circuit arrangement for computing the state of alignment.
**characterized in that**
c) at least one electrooptical position detector (8, 8'r, 8'l) of the device has two detector surfaces (8a, 8b; 8'a, 8'b) which are adjacent to one another, are substantially parallel to one another, are accessible from opposite sides and of which one (8a, 8'a) receives the associated alignment measurement beam (F; F'), and upstream of the other there is incorporated an optical inclinometer (9; 9'r, 9'l) for establishing the angle (α) which is formed by a predetermined shaft-related radial reference direction and the vertical which inclinometer is suitable for emitting the angle information as angle-dependent position of a light spot (L) to this other detector surface (8b; 8'b).

2. Device according to Claim 1, **characterized in that** the two light-sensitive detector surfaces (8a, 8b; 8'a, 8'b) of the position detector (8; 8'r, 8'l) are formed by the opposite surfaces of one and the same light-sensitive semiconductor chips.

3. Device according to Claim 1, **characterized in that** the two light-sensitive detector surfaces of the position detector are formed by the opposite surfaces of two semiconductor chips which are placed back to back and which are optically and electrically insulated from one another.

4. Device according to one of the preceding claims, which comprises a circuit arrangement for the energization and deenergization of the light source (3; 3'r, 3'l) for the alignment measurement beam (F; F') and for the energization and deenergization of the light source (11; 11'r, 11'l) for the light spot (L) in mutually alternating sequence.

5. Device according to Claim 4, **characterized in that** the circuit arrangement is arranged so that a pause exits between each deenergization of the one light source and the following energization of the other light source.

## Revendications

1. Dispositif pour déterminer les défauts d'alignement de deux arbres (1, 2) disposés l'un derrière l'autre, comprenant
a) au moins un émetteur de lumière (6, 6'r, 6'l) fixé à demeure sur l'un et/ou l'autre des arbres (1, 2), lequel émet un rayon de mesure de l'alignement (F, F') sous la forme d'un faisceau lumineux, plus précisément sous la forme d'un rayon laser, d'un arbre vers l'autre, et
b) un ou plusieurs détecteurs de position électro-optiques (8, 8'r, 8'l) à deux axes dont le nombre correspond au nombre de rayons de mesure de l'alignement (F, F') émis et qui sont chacun fixés à demeure sur l'un des arbres (1, 2), les détecteurs de position électro-optiques étant conçus pour représenter par des signaux électriques correspondants les coordonnées (x, y) du point de rencontre (P) d'un rayon de mesure de l'alignement incident sur la surface de détection photosensible (8a, 8a') et les signaux électriques pouvant être -analysés dans un arrangement de circuit électronique pour calculer l'état de l'alignement,
**caractérisé en ce que**
c) au moins un détecteur de position électro-optique (8, 8'r, 8'l) du dispositif présente deux surfaces de détection photosensibles (8a, 8b ; 8a', 8b') voisines l'une de l'autre, essentiellement parallèles l'une par rapport à l'autre et accessibles depuis des côtés opposés dont l'une (8a, 8a') reçoit le rayon de mesure de l'alignement (F, F') correspondant et l'autre est montée devant un inclinomètre optique (9 ; 9'r, 9'l) pour déterminer l'angle (α) qui est entouré par une direction de référence radiale prédéfinie en fonction de l'onde et la verticale de la terre, lequel est conçu pour délivrer l'information angulaire sous la forme d'une position dépendante de l'angle d'un spot lumineux (L) sur cette autre surface de détection (8b ; 8'b).

2. Dispositif selon la revendication 1, **caractérisé en ce que** les deux surfaces de détection photosensibles (8a, 8b ; 8'a, 8'b) du détecteur de position (8 ; 8'r, 8'l) sont formées par les surfaces opposées d'une seule et même plaquette en semiconducteur photosensible.

3. Dispositif selon la revendication 1, **caractérisé en ce que** les deux surfaces de détection photosensibles du détecteur de position sont formées par les surfaces opposées de deux plaquettes en semiconducteur disposées dos à dos et isolées optiquement et électriquement l'une de l'autre.

4. Dispositif selon l'une des revendications précédentes, **caractérisé par** un arrangement de commutation pour allumer et éteindre la source de lumière (3 ; 3'r, 3'l) pour le rayon de mesure de l'alignement (F, F') et pour allumer et éteindre la source de lumière (11 ; 11'r, 11'l) pour le spot lumineux (L) dans un ordre mutuellement alterné.

5. Dispositif selon la revendication 4, **caractérisé en ce que** l'arrangement de commutation est configuré de telle manière qu'il existe une pause entre chaque extinction de l'une des sources de lumière et l'allumage suivant de l'autre source de lumière.
